# EUROPÄISCHE PATENTSCHRIFT

(11) **EP 3 068 590 B1**
(45) Veröffentlichungstag und Bekanntmachung des Hinweises auf die Patenterteilung: **06.12.2017**
(21) Anmeldenummer: 14786606.5
(22) Anmeldetag: 07.10.2014
(51) Int. Cl.: B25J 9/04, B25J 9/10

(54) **VORRICHTUNG NACH ART EINES KNICKARMROBOTERS**
ARTICULATED ARM ROBOT-TYPE DEVICE
DISPOSITIF DU TYPE ROBOT À BRAS ARTICULÉ

(30) Priorität: 11.11.2013 DE 102013018857
(43) Veröffentlichungstag der Anmeldung: 21.09.2016
(73) Patentinhaber: Fraunhofer-Gesellschaft zur Förderung der angewandten Forschung e.V., 80686 München (DE); Universität Rostock, 18055 Rostock (DE)
(72) Erfinder: WANNER, Martin Christoph, 18211 Nienhagen (DE); KNY, Reinhart, 23968 Zierow (DE); WOLLENBERG, Michael, 18107 Rostock (DE); DRYBA, Steffen, 18198 Kritzmow (DE)
(74) Vertreter: Rösler, Uwe
(86) Internationale Anmeldenummer: PCT/EP2014/002714
(87) Internationale Veröffentlichungsnummer: WO 2015/067334

(56) Entgegenhaltungen:
- DE-B4-112006 001 920
- JP-A- S5 615 995
- JP-A- S6 044 276
- JP-A- S6 044 277
- JP-A- S59 166 479
- JP-U- S60 100 186

## Beschreibung

### Technisches Gebiet

Die Erfindung bezieht sich auf eine Vorrichtung nach Art eines Knickarmroboters zur Handhabung einer Nutzlast, mit einem Roboterarm, der an einer um eine erste Achse drehbaren Basis befestigt ist und zumindest zwei, in Art einer kinematischen Kette seriell hintereinander angeordnete Armglieder sowie eine an der kinematischen Kette endseitig angebrachte Zentralhand besitzt. Ein erstes von den zwei hintereinander angeordneten Armgliedern ist um eine zur ersten Achse orthogonal orientierten, zweiten Achse an der Basis schwenkbar gelagert, wohingegen ein zweites Armglied um eine parallel zur zweiten Achse orientierten, dritten Achse an dem ersten Armglied schwenkbar angebracht ist. Zum Schwenken beider Armglieder ist jeweils ein als Spindelantrieb ausgebildeter Linearaktor vorgesehen, der jeweils eine motorisch angetriebene Spindelmuttereinheit vorsieht, die in Eingriff mit einer Spindel in Form einer Gewindestange steht, die um eine zur zweiten Achse parallel orientierten Schwenkachse schwenkbar gelagert ist.

### Stand der Technik

Knickarmroboter sind vielseitig und weit verbreitet eingesetzte Industrieroboter, deren Kinematik aus mehreren gelenkig miteinander verbundenen Armgliedern aufgebaut ist, um Endeffektoren, wie bspw. Greifer oder Werkzeuge zu positionieren. Unter der Vielgestaltigkeit möglicher Ausgestaltungsformen derartiger Roboter besitzen jene die höchste Beweglichkeit und Flexibilität, die über eine serielle Kinematik verfügen, d.h. jedes Armglied ist seriell nur mit einem weiteren Armglied verbunden. Jedoch sind derartige Knickarmroboter bezüglich ihrer Traglast am Armende durch die Notwendigkeit des Mitführens von Antrieben und Kraftübertragungssystemen sowie auch bezüglich ihrer Positioniergenauigkeit durch den Aufsummierungseffekt von Toleranzen längs der kinematischen Kette beschränkt.

Der Druckschrift WO 84/02301 ist ein typischer, so genannter sechsachsiger vertikaler Knickarmroboter zu entnehmen, dessen erstes Armglied schwenkbar, einseitig endseitig an einer, um eine erste Achse drehbar gelagerten Basis gefügt ist. Die erste Achse entspricht der Vertikalachse, die Schwenkachse, um die das erste Armglied schwenkbar gelagert ist, wird als zweite Achse bezeichnet und ist orthogonal zur ersten Achse, d. h. horizontal orientiert. Das zweite Armglied ist seinerseits endseitig mit dem der Basis gegenüberliegenden Ende des ersten Armgliedes gleichfalls schwenkbar verbunden, nämlich um eine dritte Schwenkachse, die parallel zur zweiten Achse orientiert ist. Schließlich ist an dem der dritten Achse gegenüberliegenden Ende des zweiten Armgliedes eine, um drei Achsen drehbar gelagerte Zentralhand zur Aufnahme bzw. Manipulation von Werkstücken angebracht.

Zur kontrollierten Auslenkung des ersten Armgliedes um die zweite, horizontal gelagerte Schwenkachse ist eine Hydraulikzylindereinheit zwischen der Basis und dem ersten Armglied angebracht. Eine entsprechende zweite Hydraulikeinheit, die für ein kontrolliertes Schwenken des zweiten Armgliedes um die dritte Achse sorgt, stützt sich einerseits am ersten Armglied ab und ist andererseits mit dem zweiten Armglied verbunden.

Einen ganz ähnlichen Aufbau zur Realisierung eines vertikalen Knickarmroboters ist der Druckschrift EP 0 243 362 B1 zu entnehmen, die ebenfalls einen vertikalen Knickarmroboter mit zwei gelenkig miteinander verbundene Armglieder aufweist, zu deren Verschwenken um die jeweils horizontal orientierten zweiten und dritten Achsen eine aufwendigere Aktor-Getriebekonstruktion eingesetzt ist, um den Aktionsradius sowie auch die Traglast des Roboters zu vergrößern. Hierzu sind zwei Zylindereinheiten vorgesehen, die über ein schwenkbar gelagertes Joch miteinander verbunden sind und somit in aufeinander abgestimmter Weise sowohl für das Verschwenken des ersten Armgliedes um die zweite Achse sowie auch das Verschwenken des zweiten Armgliedes um die dritte Achse verantwortlich sind. Insbesondere ist zum Verschwenken des zweiten Armgliedes um die dritte Achse ein zusätzlicher Kraftarm schwenkbar mit dem zweiten Armglied gekoppelt, der parallel zum ersten Armglied unter Ausbildung eines sog. "Parallelogrammgetriebes" verläuft, in das eine der beiden Zylindereinheiten kinematisch eingebunden ist.

Die Druckschrift US 4,507,043 offenbart ebenfalls einen vertikalen Knickarmroboter, zu dessen Auslenkung des zweiten Armgliedes ein in diesem Fall motorisch angetriebenes Parallelogrammgetriebe vorgesehen ist.

In der Druckschrift DE 10 2011 087 958 A1 ist ein moderner Industrieschweißroboter nach Art eines Knickarmroboters beschrieben, zu dessen Auslenkung innerhalb der jeweiligen Dreh- und Schwenkachsen elektromotorische Antriebe in kompakter Bauform integriert sind, jedoch sind, wie eingangs erwähnt, aufgrund des Eigengewichtes der verbauten Komponenten, so insbesondere der elektromotorischen Antriebe, das mit dem Roboter handhabbare Nutzlastgewicht sowie auch der mit dem Roboter zugängliche Aktionsradius beschränkt.

Der Druckschrift DE 11 2006 001 920 B4 ist ein Knickarmroboter mit zwei Parallel-Kinematiken zu entnehmen, der an einer um eine vertikale erste Achse drehbaren Basis befestigt ist und zwei, in Art einer kinematischen Kette hintereinander angeordnete Armglieder besitzt, von denen ein erstes Armglied um eine zur ersten Achse orthogonal orientierten, zweiten Achse an der Basis schwenkbar gelagert ist und ein zweites Armglied um eine parallel zur zweiten Achse orientierte, dritte Achse an dem ersten Armglied schwenkbar angebracht sind. Endseitig an der kinematischen Kette ist eine Zentralhand angebracht. Zum Schwenken des ersten Armgliedes um die zweite Achse ist ein erster Linearaktuator vorgesehen, der über ein erstes Koppelgetriebe einerseits mit der Basis und andererseits mit dem ersten Armglied in Wirkverbindung steht. Für das Schwenken des zweiten Armglieds um die dritte Achse ist ein zweiter Linearaktuator vorgesehen, der über ein zweites Koppelgetriebe mit der Basis, dem ersten Armglied und dem zweiten Armglied in Wirkverbindung steht. Beide Linearaktuatoren sind jeweils als Spindelantriebe ausgebildet und sehen jeweils eine motorisch angetriebene Spindelmuttereinheit vor, die in Eingriff mit einer Spindel in Form einer Gewindestange steht, die um eine zur zweiten Achse parallel orientierte Schwenkachse schwenkbar gelagert ist. Die Koppelgetriebe weisen jeweils Stäbe konstanter Länge auf, die derart verbunden und schwenkbar angelenkt sind, so dass eine zum Halten einer, an einem beweglichen Teil der Kinematiken angreifenden Kraft erforderliche Halte- bzw. Gegenkraft möglichst unabhängig von der räumlichen Auslenkung der Kinematiken bleibt.

### Darstellung der Erfindung

Der Erfindung liegt die Aufgabe zugrunde, eine Vorrichtung nach Art eines vertikalen Knickarmroboters zur Handhabung einer Nutzlast, mit einem Roboterarm, der an einer um eine erste Achse drehbaren Basis befestigt ist und zumindest zwei, in Art einer kinematischen Kette seriell hintereinander angeordnete Armglieder sowie eine an der kinematischen Kette endseitig angebrachte Zentralhand besitzt, wobei ein erstes von den zwei seriell hintereinander angeordneten Armgliedern um eine zur ersten Achse orthogonal orientierten zweiten Achse an der Basis schwenkbar gelagert ist, wohingegen ein zweites Armglied um eine parallel zur zweiten Achse orientierten dritten Achse an dem ersten Armglied schwenkbar angebracht ist, derart weiterzubilden, so dass sowohl die mit dem Roboter handhabbare Nutzlast als auch der Aktionsradius signifikant gegenüber bisher bekannten, vergleichbaren Robotersystemen verbessert, d. h. vergrößert werden sollen.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung insbesondere unter Bezugnahme auf die Ausführungsbeispiele beschrieben.

Auf der Grundlage des lösungsgemäßen Konstruktionskonzeptes für einen Roboter nach Art eines vertikalen Knickarmroboters, zu dessen aktorischer Betätigung seiner schwenkbar gelagerten Armglieder jeweils ein mit einem Koppelgetriebe in Wirkverbindung stehender Linearaktuator eingesetzt ist, vermag ein lösungsgemäß ausgebildeter Roboter verglichen mit den derzeit am Markt verfügbaren, leistungsstärksten vertikalen Knickarmroboteranordnungen bis zu dreimal schwerere Nutzlasten innerhalb eines nahezu doppelt so großen Arbeitsraumes in allen sechs Freiheitsgraden zu positionieren.

Hierzu ist die lösungsgemäße Vorrichtung nach Art eines vertikalen Knickarmroboters gemäß den Merkmalen des Oberbegriffes des Patentanspruches 1 derart ausgebildet, dass das erste Koppelgetriebe über ein erstes Kardangelenk mit der motorisch angetriebenen Spindelmuttereinheit des ersten Linearaktuators und das zweite Koppelgetriebe über ein zweites Kardangelenk mit der motorisch angetriebenen Spindelmutter des zweiten Linearaktuators schwenkbar in Wirkverbindung steht. Das erste und zweite Kardangelenk besitzen jeweils eine parallel zur zweiten Achse orientierte Schwenkachse sowie eine orthogonal zur zweiten Achse orientierte Schwenkachse besitzt. Das zweite Koppelgetriebe verfügt jeweils über ein Zug- und Druckkräfte übertragendes erstes Koppelmittel sowie ein zweites Koppelmittel. Das erste Koppelmittel ist als ternäres Getriebeglied in Form einer starren Dreiecksstruktur ausgebildet, an deren Ecken das erste Koppelmittel jeweils um eine Schwenkachse gelagert ist. So ist das Koppelmittel um eine erste Schwenkachse, die eine Schwenkachse des zweiten Kardangelenkes ist, mit der Spindelmuttereinheit, um eine zweite Schwenkachse mit dem ersten Armglied, und um eine dritte Schwenkachse mit dem zweiten Koppelmittel schwenkbar verbunden. Jede der drei als Lageraugen ausgebildeten Ecken des ternären Getriebegliedes ist auf diese Weise von einer der drei parallel zueinander orientierten Schwenkachsen durchsetzt. Das zweite Koppelmittel ist hingegen in Art einer starren Verbindungsstrebe ausgebildet, deren ein Verbindungsstrebenende mit dem ersten Koppelmittel um die dritte Schwenkachse und deren anderes Verbindungsstrebenende mit dem zweiten Armglied um eine weitere Schwenkachse schwenkbar verbunden ist.

Alternativ zur Ausbildung und Anlenkung des vorstehend erläuterten zweiten Koppelgetriebes sieht eine nebengeordnete, alternative Lösung vor, das zweite Koppelgetriebe ebenfalls mit einem ersten und wenigstens einem zweiten Zug- und Druckkräfte übertragenden Koppelmittel auszubilden, von denen das erste Koppelmittel ein ternäres Getriebeglied in Form einer starren Dreiecksstruktur aufweist, an deren Ecken das erste Koppelmittel jeweils um eine Schwenkachse derart gelagert ist, so dass das Koppelmittel um eine erste Schwenkachse, die eine Schwenkachse des zweiten Kardangelenkes ist, mit der Spindelmuttereinheit, um eine zweite Schwenkachse nun jedoch mit dem zweiten Armglied und nicht wie vorstehend mit dem ersten Armglied, sowie um eine dritte Schwenkachse mit dem zweiten Koppelmittel einseitig schwenkbar verbunden ist, wobei das zweite Koppelmittel andererseits schwenkbar um eine Schwenkachse mit dem ersten Armglied verbunden ist.

Durch den lösungsgemäßen Einsatz eines ternären Getriebegliedes, d.h. einer starren Dreiecksstruktur, zur Realisierung des zweiten Koppelgetriebes, eröffnet sich eine Reihe von Vorteilen, gegenüber der eingangs geschilderten bekannten Lösung. Zum einen eröffnet sich durch die kompakte, starre Dreiecksstruktur eine Vergrößerung des Bewegungsbereiches bei gleichzeitiger Entlastung der motorischen Antriebe und Reduzierung von deren Auslenkhüben.

Zum anderen treten auch in bestimmten Posen des Knickarmroboters über den gesamten Bewegungsbereich der dritten Achse, immer im Falle der Horizontalstellung des zweiten Armes sowohl bei einem ansonsten vollständig zurückgezogenen als auch ausgefahrenen Schwenkzustand des ersten Armes, maximale statische Lastmomente auf, die bedingt durch die über den Bewegungsbereich der Achse annähernd konstant guten Hebelverhältnisse des Koppelgetriebes signifikant gut abgefangen werden können.

Ferner eröffnet sich durch einen zusätzlichen Anlenkungspunkt im ternären Glied ein weiterer Freiheitsgrad für eine System-Optimierung, womit sich das System besser auf den zu nutzenden Winkelbereich hinsichtlich Belastungsminimierung, Bewegungsbereich und Linearität der Bewegung abstimmen lässt.

Wie die weiteren Ausführungen unter Bezugnahme auf ein konkretes Ausführungsbeispiel zeigen werden, dient als Linearaktuator jeweils ein Spindelantrieb, der über eine elektromotorisch angetriebene Spindelmuttereinheit verfügt, die in Eingriff mit einer Spindel in Form einer Gewindestange steht. Das jeweils mit dem Linearaktuator in Eingriff stehende Koppelgetriebe vermag die translatorische Bewegung der sich längs der Spindel fortbewegenden, elektromotorisch angetriebenen Spindelmuttereinheit in eine rotatorische Bewegung um die jeweils zweite bzw. dritte Schwenkachse umzusetzen. Durch die sechsgliedrige Ausbildung des zweiten Koppelgetriebes, vorzugsweise in Form einer Watt'schen Kette, über das das zweite Armglied schwenkbar ausgelenkt wird, wird eine signifikante Vergrößerung des durch den Roboterarm zugänglichen Arbeitraumes ermöglicht. Dies betrifft insbesondere die Zugänglichkeit des Roboterarmes in Boden- und Roboterbasis-nahen Bereichen.

Vorzugsweise steht das erste Armglied der Roboterarmanordnung mit einer sich schwenkbar an der Basis abstützenden Hydraulikzylindereinheit in Wirkverbindung, um auf diese Weise die auf das erste Armglied wirkenden Stütz- und Haltekräfte zu unterstützen. Hierdurch eröffnet sich die Möglichkeit die Spindelantriebe beider Linearaktoren vorzugsweise identisch auszubilden. Dies wirkt sich vorteilhaft auf eine vereinfachte Roboteransteuerung sowie auch auf reduzierte Anschaffungskosten aus.

Zur drehbaren Lagerung der lösungsgemäßen Roboteranordnung um die erste Achse, die typischerweise der Vertikalachse entspricht, dient eine motorisch um die erste Achse drehbar angeordnete Basis, vorzugsweise in Form einer Drehkranzanordnung mit Außenverzahnung, in die zwei gegenseitig verspannte Antriebsritzel in Eingriff stehen. Mit einem derartig ausgebildeten Verspannungsgetriebe wird eine spielfreie Übertragung des Antriebsmomentes auf die Basis mit der darauf angeordneten Roboteranordnung möglich.

Die Roboteranordnung ist größtenteils modular aufgebaut. Durch Vorsehen einer im Bereich des zweiten Armgliedes angebrachten mechanischen Schnittstelle lassen sich je nach Einsatzbedingungen unterschiedlich lang ausgebildete zweite Armgliedelemente vorsehen. Je nach Anforderungen lassen sich auf diese Weise kreisförmige Arbeitsräume mit einem Radius von bis zu 5 m realisieren.

Von weiterer wichtiger Bedeutung ist die Ausbildung der für eine Greif- und Manipulatoraufgabe erforderlichen Zentralhand, die am Manipulatorendbereich des Roboterarms angebracht ist. Diese sollte möglichst kompakt und leichtgewichtig ausgebildet sein, um die Maximaltraglast der Roboteranordnung zu optimieren. Die Zentralhand ist als eigenständiges Modul ausgebildet, zu deren Antrieb bzw. Betätigung ausschließlich eine elektrische Signal- und Energieversorgung erforderlich sind, d.h. sämtliche zur Ausübung von Drehbewegungen erforderliche Drehmotoren sind in der Zentralhand integriert. Hierbei besitzt die Zentralhand drei orthogonal zueinander orientierte, motorisch angetriebene Schwenkachsen, von denen eine Schwenkachse über zwei räumlich getrennte Getriebe durch einen gemeinsamen Antriebsmotor jeweils über einen Riemenantrieb antreibbar ist. Die beiden anderen Schwenkachsen sind jeweils von einem axial in den Schwenkachsen angeordneten Antriebsmotor antreibbar.

Zur Erläuterung der lösungsgemäß ausgebildeten Roboteranordnung sei im Weiteren auf das in den Figuren illustrierte Ausführungsbeispiel verwiesen, anhand dem das der Roboteranordnung zugrunde liegende lösungsgemäße Antriebskonzept näher erläutert wird.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnungen exemplarisch beschrieben. Es zeigen:
- Fig. 1a,b,c: Seitenansicht lösungsgemäß ausgebildeter vertikaler Knickarmroboters,
- Fig. 2a, b, c: schematisierte Darstellung der Lagerung und Positionierung der als Drehkranzanordnung ausgebildeten Basis,
- Fig. 3a, b, c: perspektivische Ansicht auf die Koppelgetriebeanordnungen,
- Fig. 4: Darstellung eines Teils des zweiten Armgliedes,
- Fig. 5a, b: perspektivische Darstellung sowie Schnittbilddarstellung durch eine Zentralhand sowie
- Fig. 6a, b: Illustration des Aktionsradius der lösungsgemäß ausgebildeten Roboteranordnung.

### Wege zur Ausführung der Erfindung, gewerbliche Verwendbarkeit

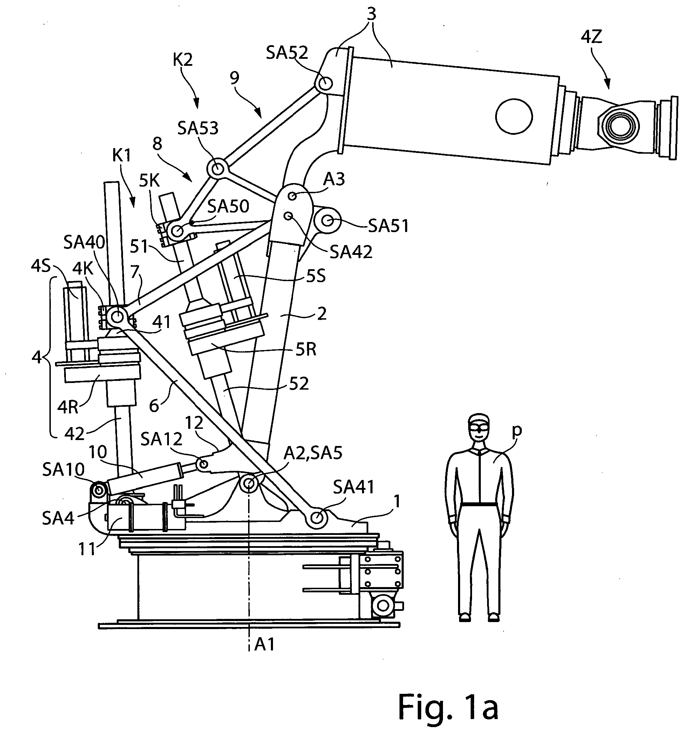

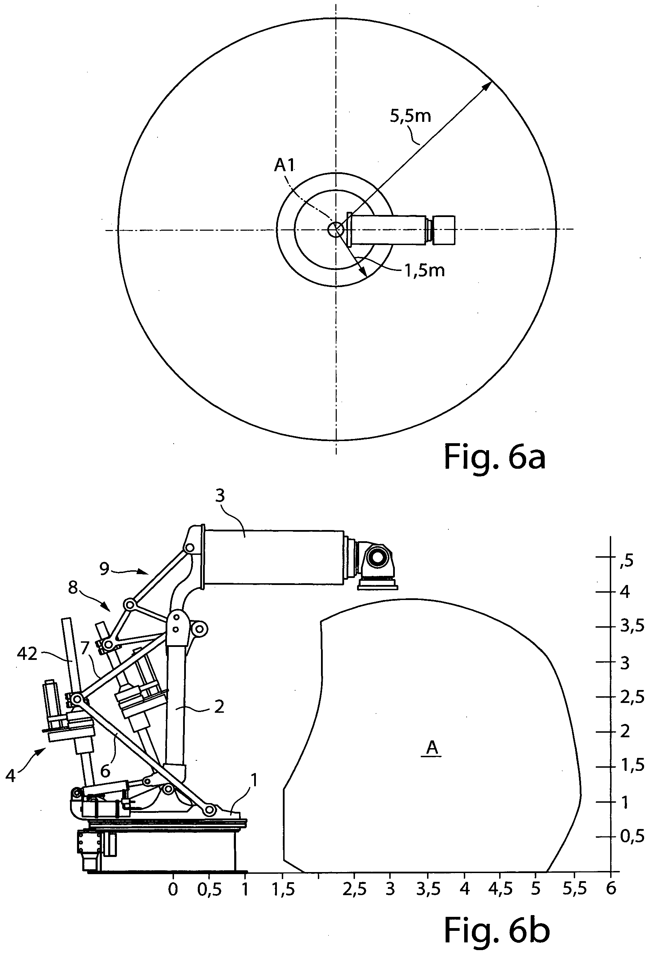

Figur 1a zeigt eine Seitenansicht eines lösungsgemäß ausgebildeten vertikalen Knickarmroboters, der einen um eine erste Achse A1, die der Vertikalachse entspricht, drehbar angeordneten Roboterarm aufweist, der zwei in Art einer kinematischen Kette seriell hintereinander angeordnete Roboterarmglieder 2, 3 sowie eine zur Handhabung und Positionierung einer nicht weiter dargestellten Nutzlast, endseitig am zweiten Armglied 3 angebrachte Zentralhand 4Z umfasst. Die als Größenvergleich dargestellte Person P soll die Dimension des Roboters veranschaulichen, auf die im Weiteren auch die Figuren 6 a und b Bezug nehmen.

Das erste der beiden Armglieder 2 ist schwenkbar um eine zur ersten Achse A1 orthogonal orientierte zweite Achse A2 an der Basis angebracht. Vorzugsweise ist die zweite Achse A2 horizontal orientiert. Endseitig am ersten Armglied 2, der Basis 1 gegenüberliegend, ist das zweite Armglied 3 schwenkbar um eine dritte Achse A3, die parallel zur zweiten Achse A2 orientiert ist, am ersten Armglied 2 angebracht.

Für ein dynamisches Verschwenken des ersten Armgliedes 2 um die horizontale zweite Achse A2 dient ein Linearaktuator 4, der über ein erstes Koppelgetriebe K1 einerseits mit der Basis 1 und andererseits mit dem ersten Armglied 2 in Wirkverbindung steht. Der erste Linearaktuator 4 ist als Spindelantrieb ausgebildet und verfügt über eine elektromotorisch angetriebene Spindelmuttereinheit 41, die in Eingriff mit einer Spindel 42 in Form einer Gewindestange steht, deren unteres Spindelende an der um die erste Achse A1 rotierbar gelagerten Basis 1 um eine zur zweiten Achse A2 parallel orientierten Schwenkachse SA4 schwenkbar gelagert ist.

Der als Spindelantrieb ausgebildete Linearaktuator 4 verfügt über einen mittels eines Servomotors 4S angetriebenen Riemenantrieb 4R, der in Eingriff mit der Spindelmuttereinheit 41 steht, wodurch sich die Spindelmuttereinheit 41 längs des Gewindes der Gewindestange 42 in Abhängigkeit der Servomotordrehrichtung längs der Spindel 42 linear nach oben bzw. nach unten fortzubewegen vermag.

Die von der Spindelmuttereinheit 41 längs der Spindel 42 ausgeübte Linearbewegung wird mit Hilfe des Koppel- bzw. Hebelgetriebes K1 in eine rotatorische Bewegung des ersten Armgliedes 2 um die zweite Achse 2 umgesetzt. Hierzu weist das erste Koppel- bzw. Hebelgetriebe K1 ein erstes und zweites Zug- und Druckkräfte übertragendes Koppelmittel 6, 7 auf, von denen das erste Koppelmittel 6 einerseits mittel- oder unmittelbar, vorzugsweise über ein Einachsdrehlager an der Basis 1, um eine zur zweiten Achse A2 parallel orientierte Schwenkachse SA41 schwenkbar gelagert ist und andererseits mit der Spindelmuttereinheit 41 des ersten Linearaktuators 4 ebenfalls schwenkbar um eine Schwenkachse SA40 verbunden ist. Die Schwenkachse SA41, um die das erste Koppelmittel 6 schwenkbar an der Basis 1 angelenkt ist, weist einen lateralen Abstand zur Schwenkachse SA4 auf, um die die Spindel 42 schwenkbar an der Basis 1 gelagert ist, um auf diese Weise einerseits ein möglichst großes, die Spindel 42 auslenkendes Drehmoment am Ort der Spindelmuttereinheit 42 zu erzeugen bei möglichst minimaler Zugbelastung längs der Spindel und andererseits dafür Sorge zu tragen, Kollisionen während der Auslenkung des Spindelantriebes mit dem damit verbundenen ersten Koppelgetriebe mit weiteren Komponenten des Roboterarmes zu vermeiden.

Das zweite Koppelmittel 7 des ersten Koppelgetriebes K1 ist einerseits mit der Spindelmuttereinheit 41 um die Schwenkachse SA40 schwenkbar verbunden und andererseits an dem ersten Armglied 2 um eine zur zweiten Achse A2 parallel orientierten Schwenkachse SA42 schwenkbar gelagert. Zur schwenkbaren Lagerung des zweiten Koppelmittels 7 am ersten Armglied 2 ist es ebenfalls aus Gründen einer möglichst großen Drehmomenterzeugung bzw. -übertragung vorteilhaft, die Anbringung der Schwenkachse SA42 möglichst weit von der zweiten Achse A2 längs des ersten Armgliedes 2 zu platzieren, d. h. möglichst an dem der zweiten Achse A2 gegenüberliegenden Ende des ersten Armgliedes 2. Selbstverständlich ist die Wahl der Anbringung der Anlenkungspunkte der einzelnen miteinander in einem kinematischen Verbund stehenden Komponenten in Abhängigkeit von deren Dimensionen und Längen, so insbesondere in Abhängigkeit von der Spindellänge, vorzunehmen.

Beide Koppelmittel 6, 7 sind mit der Spindelmuttereinheit 41 über ein gemeinsames Kardangelenk 4K verbunden, so dass eine möglichst verlustfreie Umsetzung, d.h. frei von etwaigen Verkantungen, der von der Spindelmuttereinheit 41 ausgeübten Linearbewegung in eine das erste Armglied 2 um die zweite Achse A2 orientierte Schwenkbewegung ermöglich wird. Durch die optimiert beabstandete Anordnung der kinematischen Anlenkpunkte des ersten Koppelgetriebes K1 an den Orten der Schwenkachsen SA41, SA42 sowie des Kardangelenkes 4K am Ort der Spindelmuttereinheit 41 kann die auf die Spindel 42 wirkende Zugkraft bedingt durch die motorische Auslenkung der Spindelmuttereinheit 41 klein bzw. minimiert werden.

In vorteilhafter Weise sind zudem an der um die erste Achse A1 drehbar angeordneten Basis 1 eine Hydraulikzylindereinheit 10 sowie ein die Hydraulikzylindereinheit 10 speisender Druckspeicher 11 angebracht. Die Hydraulikzylindereinheit 10 stützt sich einseitig an der Basis 1 ab, an der sie zudem um eine Schwenkachse SA10 drehbar gelagert ist. Andererseits ist die Hydraulikzylindereinheit 10 drehbar um die Schwenkachse SA12 mit einem mit dem ersten Armglied 2 fest verbundenen Fortsatz 12 verbunden. Die Hydraulikzylindereinheit 10 dient somit als Gewichtsausgleichsystem und vermag die Belastung der motorisch angetriebenen Spindelmuttereinheit 41 sowie den für den Linearaktuator 4 erforderlichen Energieverbrauch zu senken.

Der Antrieb zu Initiierung dynamischer Schwenkbewegungen des zweiten Armgliedes 3 um die dritte Achse A3 erfolgt mit einem zum ersten Linearaktuator 4 lediglich in der Läge unterschiedlichen, zweiten Linearaktuator 5 und einem damit in Wirkverbindung stehenden zweiten Koppelgetriebe K2, das als sechsgliedriges Koppelgetriebe, vorzugsweise in Art einer Watt'schen Kette ausgebildet ist. Gleichsam dem ersten Linearaktuator 4 ist der zweite Linearaktuator 5 als Spindelantrieb ausgebildet und weist eine motorisch angetriebene Spindelmuttereinheit 51 auf, die in Eingriff mit einer als Gewindestange ausgebildeten Spindel 52 steht. Nur der Vollständigkeit halber wird darauf hingewiesen, dass auch in diesem Fall ein mit der Spindelmuttereinheit 51 in Wirkverbindung stehender Riemenantrieb 5R von einem Servomotor 5S angetrieben wird. Ein großer Vorteil der lösungsgemäßen Roboteranordnung ist darin zu sehen, dass identische Linearaktuatoren für den ersten und zweiten Linearaktuator verwendet werden können. Dies reduziert die Herstellungskosten in der Serienfertigung deutlich.

Die von der Spindelmuttereinheit 51 in Abhängigkeit der Motordrehrichtung des Servomotors 5S längs der Spindel 52 durchgeführte Linearbewegung wird mit Hilfe des zweiten Koppelgetriebes K2 in eine um die dritte Achse A3 orientierte Rotations- bzw. Schwenkbewegung umgesetzt, mit der das zweite Armglied 3 um die dritte Achse A3 relativ zum ersten Armglied 2 geschwenkt werden kann.

Hierzu ist die Spindel 52, die Teil des zweiten Koppelgetriebes ist, mit ihrem unteren Spindelende schwenkbar um die Schwenkachse SA5 gelagert, die identisch ist mit der zweiten Achse A2, wodurch sich die Spindel 52 unmittelbar an der Basis 1 abstützt. Dies bewirkt zum einen, dass Schwenkbewegungen um die Achse 2 sowie Achse 3 vollständig voneinander entkoppelt sind und zum anderen können auf diese Weise die längs der Spindel 52 wirkenden Zugkräfte direkt vom Sockel des Roboters, d. h. von der Basis 1 aufgenommen werden. Antriebsbedingte Zugbelastungen durch den Linearaktuator 5 in anderweitig tragenden Strukturen der Bewegungskinematik des Roboters treten nicht auf.

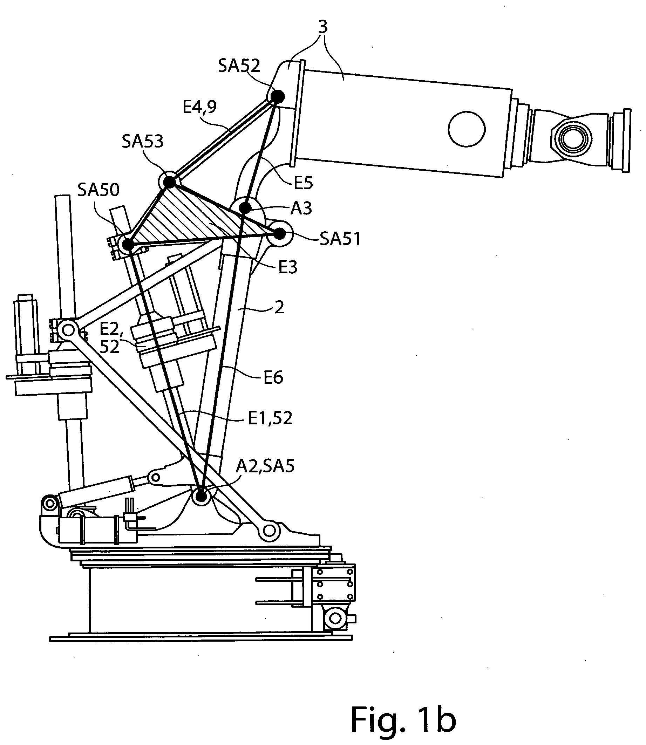

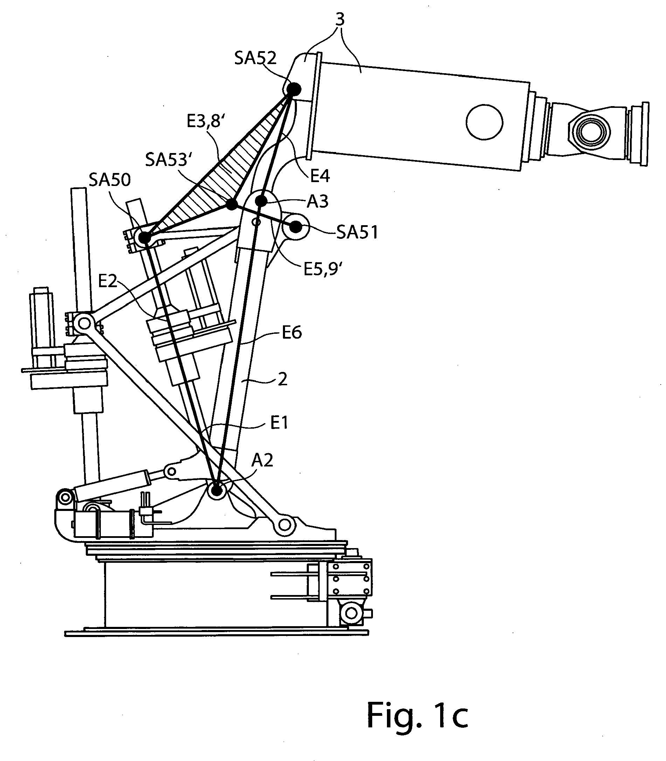

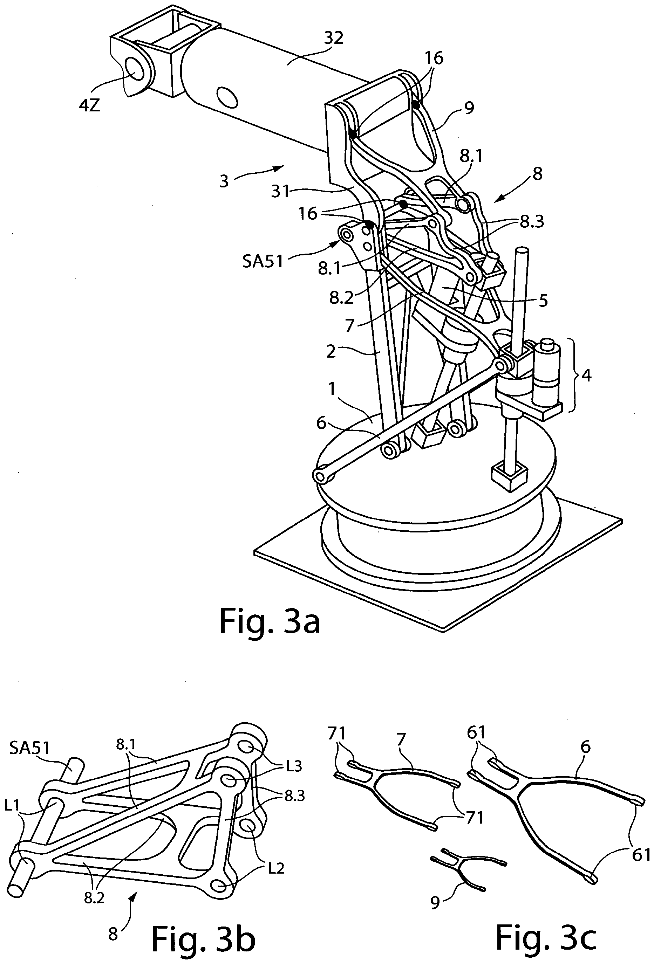

Das zweite Koppelgetriebe K2 umfasst ferner ein erstes Koppelmittel 8, das in Art einer starren dreieckförmigen Struktur, einem sogenannten ternären Getriebeglied, ausgebildet ist. Ein ternäres Getriebeglied weist drei, über Verbindungsstreben starr miteinander verbundene Anlenkungspunkte, vorzugsweise jeweils als Lageraugen ausgebildet, auf. In Figur 1 a ist lediglich eine Seitenansicht des ersten Koppelmittels 8 gezeigt, dessen räumliche Ausbildung jedoch in Figur 3b dargestellt ist, die im weiteren Beschreibungstext näher erläutert wird. Das erste Koppelmittel 8 ist einerseits an dem ersten Armglied 2 um eine zur zweiten Achse A2 parallel orientierten Schwenkachse SA51 schwenkbar gelagert und andererseits mit der Spindelmuttereinheit 51 des zweiten Linearaktuators 5 über ein Kardangelenk 5K zumindest um die Schwenkachse SA50 drehbar fest verbunden. Am Koppelmittel 8 ist eine zusätzliche Schwenkachse SA53 vorgesehen, um die das Koppelmittel 9 einseitig schwenkbar gelagert ist, das andererseits um die Achse SA52 schwenkbar mit dem zweiten Armglied 3 verbunden ist. Die Sechsgliedrigkeit des zweiten Koppelgetriebes K2 setzt sich aus der Anzahl der durch Gelenke, bzw. Schwenkachsen, miteinander verbundenen Einzelglieder zusammen. Zur Illustration der Einzelglieder E1 bis E6 sei auf die Figur 1b verwiesen, die den gleichen Aufbau des in Figur 1a dargestellten Ausführungsbeispiels zeigt, lediglich ergänzt durch die Kennzeichnungen der die Sechsgliedrigkeit der Watt'schen Kette des zweiten Koppelgetriebes K2 begründenden Einzelkomponenten E1 bis E6. Die Spindel 52 stellt die erste Einzelkomponente E1 dar, längs der die Spindelmuttereinheit 51 als zweite Komponente E2 bidirektional längsbeweglich angeordnet ist. Mit der als Spindelmuttereinheit 51 ausgebildeten zweiten Einzelkomponente E2 ist schwenkbar um die Schwenkachse SA50 die starre Dreiecksstruktur als dritte Einzelkomponente E3 verbunden, die zudem schwenkbar um die Schwenkachse SA51 mit dem ersten Armglied 2 und um die Schwenkachse SA53 mit dem zweiten Koppelmittel 9 verbunden ist, das die vierte Einzelkomponente E4 darstellt. Die vierte Einzelkomponente E4 ist ihrerseits schwenkbar mit dem zweiten Armglied 3 als fünfte Einzelkomponente E5 um die Achse SA52 verbunden. Das zweite Armglied 3 ist letztlich über die dritte Achse A3 schwenkbar an dem ersten Armglied 2, das der sechsten Einzelkomponente E6 entspricht, verbunden ist.

Sämtliche Anlenkungspunkte sowie Längen und Anstellwinkel des zweiten Koppelgetriebes K2 sind derart aufeinander abgestimmt, so dass die längs der Spindel 52 wirkende Spindelkraft minimiert ist und keinerlei Kollisionen zwischen dem motorisch angetriebenen ersten und zweiten Koppelgetriebe auftreten können. Hierzu sind die Koppelmittel der beiden Koppelmittelgetriebe, wie dies auch im Weiteren erläutert wird, gabel- bzw. koppelartig ausgebildet, wodurch die Kraftübertragung sowie auch die Steifigkeit der Konstruktion der jeweiligen Koppelgetriebe signifikant erhöht werden kann.

Auch sorgen die Kardangelenke 4K, 5K, des ersten und zweiten Linearaktuators für eine verlustfreie, d.h. frei von jeglichen Verkantungen während der Ausführung der Schwenkbewegungen, Kraft- und Drehmomenten Übertragung, um zu verhindern, dass andere Belastungen als Zug- oder Druckkräfte längs der Spindeln übertragen werden. Die Kardangelenke sind als Kreuzgelenke ausgebildet und weisen hierzu jeweils zwei orthogonal zueinander orientierte Schwenkachsen auf, von denen jeweils eine, SA40, SA50 parallel zur zweiten Achse A2 orientiert ist. Beide Schwenkachsen des Kreuzgelenkes sind jeweils orthogonal zur Spindelachse des Linearaktuators orientiert.

Alternativ zu der vorstehend erläuterten, bevorzugten Ausbildung des zweiten Koppelgetriebes K2 als sechsgliedrige Watt'sche Kette ist eine äquivalente Realisierung von K2 in Form einer so genannten sechsgliedrigen Stephenson'schen Kette gleichsam denkbar, die in Figur 1c schematisch skizziert ist. Mit Ausnahme der Ausbildung und der kinematische Anbringung des vorstehend erläuterten ersten Koppelmittels 8 verbleibt die in Figur 1c illustrierte Roboteranordnung ansonsten unverändert.

Hier ist das modifizierte Koppelmittel 8' gleichsam als starre Dreiecksstruktur ausgeführt und sieht an ihren Dreieckspitzen ebenfalls wie zuvor, jeweils als Lageraugen ausgebildete Einachsgelenkverbindungen vor. Nun ist die Dreiecksstruktur 8' direkt mit dem zweiten Armglied 3 schwenkbar um die Schwenkachse SA52 verbunden und stützt sich gelenkig um die Schwenkachsen SA53' und SA51 über das modifizierte Koppelmittel 9' am ersten Armglied 2 ab.

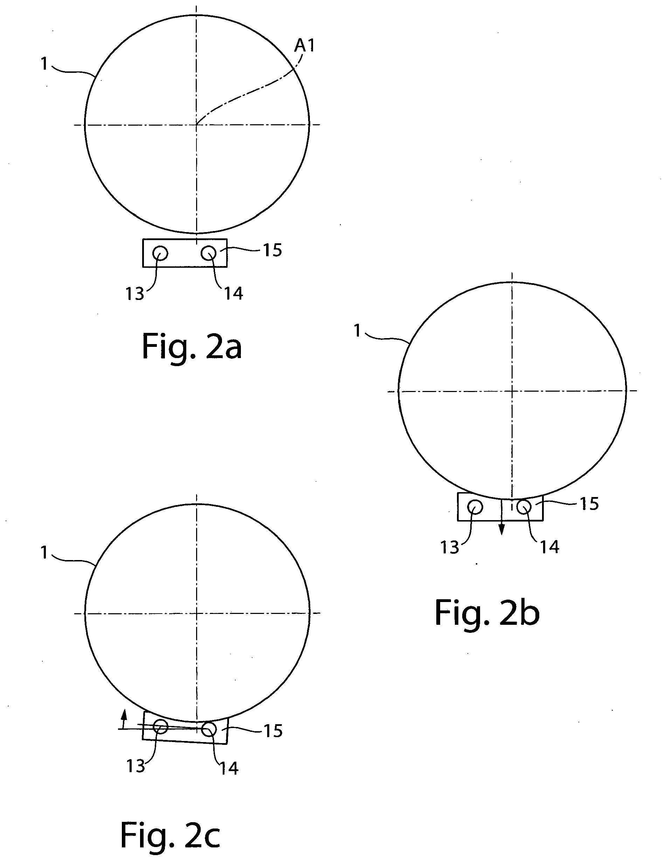

In den Figuren 2a - c sind jeweils Draufsichtdarstellungen auf die als Drehkranz mit Außengewinde ausgebildete, um die erste Achse A1 rotierbar gelagerte Basis 1 dargestellt. Um für eine stabile Lagerung der Basis 1 sowie eine spielfreie Übertragung eines Antriebsmomentes auf die als Drehkranz ausgebildete Basis 1 zu gewährleisten, sind zwei mechanisch gegeneinander verspannte Antriebsritzel 13, 14 vorgesehen, die innerhalb eines gemeinsamen Getriebegehäuses in Form eines Verspannungsgetriebes 15 untergebracht sind. Im Weiteren gilt es beide Antriebsritzel 13, 14 exakt und unabhängig voneinander derart an die Außenperipherie der als Drehkranz ausgebildeten Basis 1 zu fügen, so dass die Zahnräder beider Antriebsritzel exakt auf jenen des Drehkranzes abrollen. Die Spielfreiheit der ineinandergreifenden Zahnkränze ergibt sich aus der Verspannung der beiden Getriebe gegeneinander. Diese Anordnung ist vor allem dynamischen Effekten geschuldet. Es soll verhindert werden, dass bei einem Reversieren, d.h. dem Ändern der Drehrichtung, das Zahnflankenspiel zu Ungenauigkeiten bei der Bewegung der Last führt.

Aufgrund der Anordnung mit den zwei gegeneinander verspannten Antriebsritzeln 13, 14 ist eine spezielle Positioniereinrichtung für das verspannte Getriebe 15 erforderlich, das sowohl eine translatorische sowie auch rotatorische Positionierung ermöglicht.

In einem ersten Schritt wird durch Translation des Getriebegehäuses zunächst ein Antriebsritzel 14 exakt mit der Zahnflankenstruktur des Drehkranzes in Eingriff gebracht wird, wie dies in Figur 2b illustriert ist, wobei das zweite Antriebsritzel 13 von der Drehkranzstruktur beabstandet bleibt. Im nächsten Schritt gemäß Figur 2c wird das Verspannungsgetriebe 15 samt des Antriebsritzels 13 um die Drehachse des Antriebsritzels 14 an die Zahnflankenkontur des Drehkranzes 1 gedreht. Durch diese Anordnung, bei der die Drehachse, um die herum das Getriebegehäuse, bzw. das Verspannungsgetriebe 15 gedreht wird, und die Drehachse des Antriebsritzels 14 übereinander liegen, d.h. identisch, sind, ist es möglich die Teilkreise beider Antriebsritzel 13, 14 unabhängig voneinander auf den Teilkreis des Drehkranzes 1 einzustellen und einen perfekten Lauf der Zahnradpaarungen zu gewährleisten.

Die für den vorstehenden Positioniervorgang erforderliche Positioniereinrichtung umfasst speziell angepasste Lagerschalen, äußere und innere Lagerschalen, mit jeweils unterschiedlichen Radien, die gemeinsam auf Führungsschienen translatorisch verschiebbar angebracht sind. Nach geeigneter translatorischer Positionierung werden die äußeren Lagerschalen fixiert und die inneren Lagerschalen in geeigneter Weise gedreht. Greifen beide Antriebsritzel exakt in den Drehkranz ein, so werden beide Lagerschalen starr miteinander verbunden.

Auf diese Weise ist sichergestellt, dass beide Antriebsritzel 13, 14 exakt mit der Zahnkranzstruktur des Drehkranzes in Eingriff stehen. Hierdurch ist es möglich, dass Antriebsmomente von bis zu 60 kNm übertragen werden können, mit denen sowohl das Eigengewicht der Roboteranordnung, aber insbesondere Nutzlasten, die mit Hilfe der Roboteranordnung handhabbar und positioniert werden, von bis zu 4 t, bewegt werden können.

Figur 3a zeigt eine perspektivische Ansicht des Roboterarmes, an hand der die räumliche Ausbildung des ersten und zweiten Koppelgetriebes entnommen werden kann. Bei der Handhabung von Nutzlasten, insbesondere mit Hilfe einer um drei Raumachsen beliebig verdrehbaren Zentralhand 4Z treten neben den Hubkräften längs der ersten und zweiten Armglieder 2, 3 orientierte Torsionsbelastungen auf, die zumindest teilweise von den zwei Koppelgetrieben K1 und K2 aufzunehmen sind. Um für eine ausreichende Traglaststabilität sowie insbesondere auch Torsionssteifigkeit innerhalb der zwei Koppelgetriebe K1, K2 zu sorgen, sind die die jeweiligen Koppelgetriebe zusammensetzenden Koppelmittel spangen- bzw. gabelförmig ausgebildet.

Zur Abstützung bzw. Aufnahme der längs des Roboterarms wirkenden Lastmomente sind die ersten und zweiten Armglieder 2, 3 jeweils in Form von parallel zueinander verlaufenden Doppelstreben ausgebildet, wie dies aus der perspektivischen Darstellung gemäß Figur 3a zu entnehmen ist. Zudem sind das erste und zweite Koppelmittel 6, 7 jeweils doppelschwingenartig ausgebildet und verfügen pro Schwenkachse jeweils über zwei Verbindungspunkte, bzw. Lageraugen 61, 71 über die längs der einzelnen Koppelmittel Torsionsmomente abgefangen werden können. Die einzelnen doppelschwingenartig ausgebildeten Koppelmittel 6, 7 sind konstruktiv derart ausgestaltet, dass sie sich besonders einfach fertigen lassen. Die einzelnen als Lageraugen ausgebildeten Verbindungspunkte sowie die Koppelmittel 6, 7 selbst sind als einzelne Brennteile ausgebildet, die durch anschließendes Verschweißen zusammengefügt werden. Die Schweißnähte werden dabei in jeweils gering belasteten Bereichen der doppelschwingenartig ausgebildeten Koppelmittel gelegt, siehe Figur 3c.

Neben der hohen Torsionssteifigkeit erlauben die doppelschwingenartig ausgebildeten Koppelmittel 6, 7 einen möglichst kompakten und Bauraum reduzierten Zusammenbau beider, die einzelnen Armglieder 2, 3 antreibenden Linearaktuatoren 4, 5, und gewährleisten überdies, dass die Linearaktuatoren nebst der damit verbundenen Koppelgetriebe während des Robotereinsatzes nicht in gegenseitige Kollision geraten.

Ferner kann aus Figur 3a die Ausbildung und Anbringung des zweiten Koppelgetriebes K2 entnommen werden, so insbesondere das als starre Dreiecksstruktur ausgebildete Koppelmittel 8, das in Einzeldarstellung in Figur 3b illustriert ist, in der zusätzlich die Schwenkachse SA51 enthalten ist. Das als ternäres Getriebeglied ausgebildete Koppelmittel 8 verfügt über eine dreidimensionale, offen ausgebildete Struktur und setzt sich aus Gabeln bzw. Doppelstreben 8.1, 8.2, 8.3 zusammen, an denen Lageraugen L1, L2, L3 angeschweißt sind. Das Koppelmittel 8 umfasst dabei einen inneren Bauraum, in den durch die offene Ausbildung der Gabel- bzw. Strebenkonstruktion bspw. der Servomotor 5S des zweiten Linearaktuators 5 bei maximaler Strecklage der Roboteranordnung kollisionsfrei eindringen kann.

Ferner greift das doppelstrebig ausgebildete Koppelmittel 8 in Verbindung mit dem doppelgabelförmig ausgebildeten zweiten Koppelmittel 9, das in Figur 3c illustriert ist, an vier Lagerstellen 16 an dem zweiten Armglied 3 an. Diese spezielle konstruktive Auslegung des zweiten Koppelgetriebes K2 sorgt für eine hohe Steifigkeit und gestattet ein Einleiten bzw. Abfangen von Torsionsmomenten, die wiederum durch die Torsionssteifigkeit des unteren ersten Koppelgetriebes K1 abgefangen werden können bzw. von diesem herrühren.

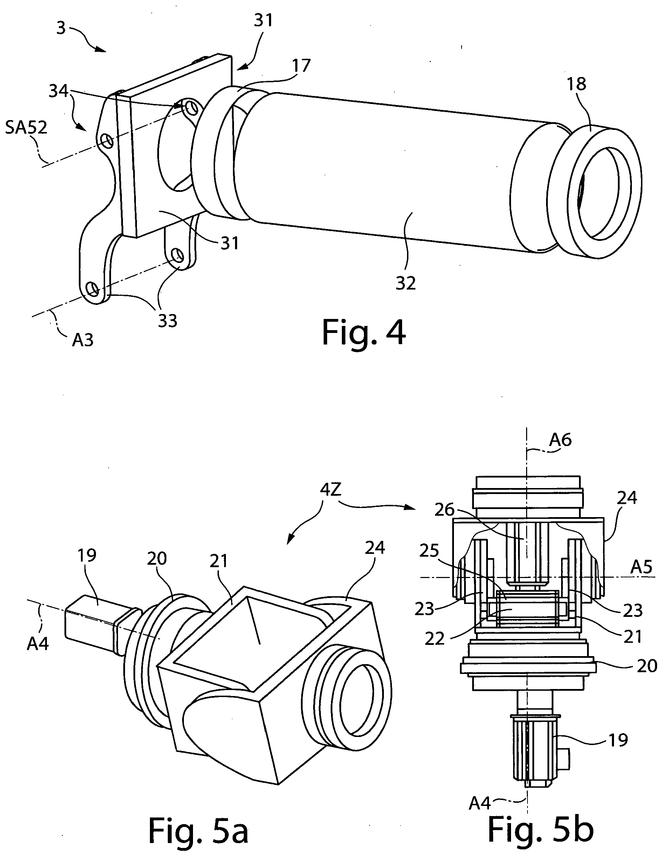

In Figur 4 sind die Einzelteile des zweiten Armgliedes 3 in perspektivischer Ansicht illustriert. Die Doppelarmschwinge 31 sieht Lageraugen 33, 34 vor, zur schwenkbeweglichen Anordnung des zweiten Armgliedes 3 relativ zum ersten Armglied 2 bzw. des zweiten Koppelgetriebes K2. So dienen die Lageraugen 33 zum Verschwenken des zweiten Armgliedes 3 um die dritte Achse A3 sowie die Lageraugen 34 zur schwenkbeweglichen Anlenkung des zweiten Koppelmittels 9 des zweiten Koppelgetriebes K2 um die Schwenkachse SA52. Um die Modularität des Robotersystems zu gewährleisten, kann je nach Einsatz- und Anwendungszweck über ein Montagemittel 17 ein unterschiedlich lang dimensioniertes Armrohr 32 abnehmbar fest an die Doppelarmschwinge 31 montiert werden. Über ein weiteres Montagemittel 18 kann ebenfalls lösbarfest bspw. eine Zentralhand 4Z, wie sie in den Figuren 5a, b illustriert ist, angebracht werden.

Die Zentralhand 4Z stellt ein eigenständiges Modul dar, das bspw. durch eine einfachere, für viele Anwendungen ausreichende Lösung, wie bspw. eine Palletierhand ausgetauscht werden kann. Bei der Ausbildung der Zentralhand 4Z handelt es sich um eine klassische Zentralhand, die sich durch folgende Eigenschaften auszeichnet:
Ein Antriebsmotor 19 ist über ein Getriebe 20 mit einem U-förmigen Übertragungselement 21 zu dessen Drehantrieb um die vierte Achse A4 verbunden. Das Getriebe 20 besitzt eine Hohlwelle, so dass durch diese Energiezuführungen sowie Datenkabel für die restlichen Antriebe der Zentralhand 4Z hindurchgeführt werden können. Innerhalb des U-förmigen Übertragungselementes 21 ist ein weiterer Motor 22 angeordnet, der seinerseits über ein weiteres Getriebe 23 eine Bewegung um die fünfte Achse A5 initiiert. Das Getriebe 23 besteht aus zwei sich gegenüberliegenden Getriebeeinheiten, die jeweils mit Hilfe eines Riementriebes durch den gemeinsamen Servomotor 22 angetrieben werden. Durch diese Anordnung ist es möglich, die Handachse besonders schmal und auszuführen.

Die sich gegenüberliegenden Getriebeeinheiten 23 der fünften Achse A5 treiben ein weiteres U-förmiges Übertragungselement 24 an, in dem das Getriebe der sechsten Achse A6 gelagert ist. Die Motoren 25, 26 bezüglich der fünften und sechsten Achse A5, A6 befinden sich jeweils innerhalb der beiden Übertragungselemente 21, 24 und tragen dazu bei, dass die Abmessungen der Handachse sehr klein sind.

Die lösungsgemäße Roboteranordnung stellt eine robuste und modular variierbare Konstruktion dar, die eine individuelle Konfektionierung an unterschiedliche Nutzlastaufgaben erlaubt.

In Figur 6a ist eine Draufsicht auf einen lösungsgemäß ausgebildeten vertikalen Knickarmroboter gezeigt, dessen maximale Reichweite zur Betätigung von Nutzlasten von bis zu vier Tonnen 5,5 m betragen kann. Durch die Eigengröße der Roboteranordnung ist ein Bereich um die erste Achse A1 mit einem Radius von ca. 1,5 m ausgenommen.

Figur 6b illustriert die maximale vertikale Ausdehnung des Arbeitsbereiches A, die bis zu 4 m in vertikaler Erstreckung reichen kann. Hierbei kann aus der Figur 6b die Dimensionierungen einzelner Roboterkomponenten entnommen werden. So sind hierzu längs der Horizontal- als auch Vertikalachse Entfernungsangaben in Metern angegeben. Bspw. beträgt die Länge des ersten Armgliedes 2 gemessen von der Lage der ersten Achse, die in der Darstellung eine Höhe von 1 m besitzt, 2,5 m. Die horizontale Länge des zweiten Armgliedes 3 entspricht etwa 2,5 m.

Um einem Robotersystem eine ausreichend hohe Steifigkeit zu verleihen, die notwendig ist, um eine hohe Positioniergenauigkeit zu erreichen, müsste in einer herkömmlichen Bauweise der Roboter sehr massiv und schwer gebaut werden.

Zudem sind bei der Bewegung großer Nutzlasten sehr hohe Antriebsmomente um, die einzelnen Roboterachsen erforderlich, die jedoch von innerhalb der einzelnen Achsen verbauten Motoren mit entsprechenden Getrieben, wie sie derzeit auf dem Markt erhältlich sind, nicht realisiert werden können. Aus diesen Gründen ist der vorstehend erläuterte, lösungsgemäße kinematische Aufbau für einen Großroboter gewählt worden, bei dem die Vertikalachse, d. h. die erste Achse A1 direkt mit Hilfe eines gegenseitig verspannten Antriebritzelpaares, das in Eingriff mit einem Drehkranz steht, gewählt worden. Die zweite und dritte Roboterachse A2, A3 werden entsprechend über Linearaktuatoren angetrieben, die ihren Vortrieb mittels Koppelgetriebe in eine Rotationsbewegung der Achsen umsetzen. Die mit den Linearaktuatoren verbundenen Koppelgetriebe sind aufgrund ihrer doppelschwingenartig ausgebildeten Form leicht und torsionssteif ausgebildet und vermögen darüber hinaus hohe Belastungen aufzunehmen und ihnen Stand zu halten.

### Bezugszeichenliste

- 1: Basis
- 2: erstes Armglied
- 3: zweites Armglied
- 31: Doppelarmschwinge
- 32: Armrohr, Rohr
- 33, 34: Lageraugen
- 4Z: Zentralhand
- 4: erster Linearaktuator
- 41: Spindelmuttereinheit
- 42: Spindel, Gewindestange
- 4S: Servomotor
- 4R: Riemenantrieb
- 4K: Kardangelenk
- 5: zweiter Linearaktuator
- 51: Spindelmuttereinheit
- 52: Spindel, Gewindestange
- 5S: Servomotor
- 5R: Riemenantrieb
- 5K: Kardangelenk
- 6: erstes Koppelmittel
- 61: Verbindungspunkte, Lageraugen
- 7: zweites Koppelmittel
- 71: Verbindungspunkte, Lageraugen
- 8, 8': erstes Koppelmittel, starre Dreiecksstruktur
- 9, 9': zweites Koppelmittel
- 10: Hydraulikzylindereinheit
- 11: Druckspeicher
- 12: Fortsatz
- 13, 14: Antriebsritzel
- 15: Verspannungsgetriebe
- 16: Lagerstelle
- 17, 18: Montagemittel
- 19: Antriebsmotor
- 20: Getriebe
- 21: Übertragungselement
- 22: Motor
- 23: Getriebe
- 24: Übertragungselement
- 25: Motor
- 26: Motor
- A1: erste Achse
- A2: zweite Achse
- A3: dritte Achse
- A4: vierte Achse
- A5: fünfte Achse
- A6: sechse Achse
- SA4: Schwenkachse
- SA40: Schwenkachse
- SA41: Schwenkachse
- SA42: Schwenkachse
- SA5: Schwenkachse
- SA50: Schwenkachse
- SA51: Schwenkachse
- SA52: Schwenkachse
- SA10: Schwenkachse
- SA12: Schwenkachse
- SA53: Schwenkachse
- SA53': Schwenkachse
- P: Person

## Patentansprüche

1. Vorrichtung nach Art eines Knickarmroboters zur Handhabung einer Nutzlast, mit einem Roboterarm (R), der
- an einer um eine erste Achse (A1) drehbaren Basis (1) befestigt ist,
- zumindest zwei, in Art einer kinematischen Kette hintereinander angeordnete Armglieder (2, 3), von denen ein erstes Armglied (2) um eine zur ersten Achse orthogonal orientierte, zweite Achse (A2) an der Basis (1) schwenkbar gelagert ist und ein zweites Armglied (3) um eine parallel zur zweiten Achse (A2) orientierte, dritte Achse (A3) an dem ersten Armglied (2) schwenkbar angebracht sind, sowie
- eine an der kinematischen Kette endseitig angebrachte Zentralhand (4Z) besitzt,
wobei ein das erste Armglied (2) um die zweite Achse (A2) schwenkender, erster Linearaktuator (4) vorgesehen ist, der über ein erstes Koppelgetriebe (K1) einerseits mit der Basis (1) und andererseits mit dem ersten Armglied (2) in Wirkverbindung steht, und
ein das zweite Armglied (3) um die dritte Achse (A3) schwenkender, zweiter Linearaktuator (5) vorgesehen ist, der über ein zweites Koppelgetriebe (K2) mit der Basis (1), dem ersten Armglied (2) und dem zweiten Armglied (3) in Wirkverbindung steht, und der erste und zweite Linearaktuator (4, 5) jeweils als Spindelantriebe ausgebildet sind, die jeweils eine motorisch angetriebene Spindelmuttereinheit (41, 51) vorsieht, die in Eingriff mit einer Spindel (42, 52) in Form einer Gewindestange steht, die um eine zur zweiten Achse (A2) parallel orientierte Schwenkachse (SA4, SA5) schwenkbar gelagert ist,
**dadurch gekennzeichnet,**
**dass** das erste Koppelgetriebe (K1) über ein erstes Kardangelenk (4K) mit der motorisch angetriebenen Spindelmuttereinheit (41) des ersten Linearaktuators (4) und das zweite Koppelgetriebe (K2) über ein zweites Kardangelenk (5K) mit der motorisch angetriebenen Spindelmutter (51) des zweiten Linearaktuators (5) schwenkbar in Wirkverbindung steht,
**dass** das erste und zweite Kardangelenk (4K, 5K) jeweils eine parallel zur zweiten Achse (A2) orientierte Schwenkachse sowie eine orthogonal zur zweiten Achse (A2) orientierte Schwenkachse besitzt,
**dass** das zweite Koppelgetriebe (K2) jeweils ein Zug- und Druckkräfte übertragendes erstes Koppelmittel (8) sowie zweites Koppelmittel (9) aufweist,
**dass** das erste Koppelmittel (8) ein ternäres Getriebeglied in Form einer starren Dreiecksstruktur ist, an deren Ecken das erste Koppelmittel (8) jeweils um eine Schwenkachse derart gelagert ist, so dass das Koppelmittel (8) um eine erste Schwenkachse, die eine Schwenkachse des zweiten Kardangelenkes (5K) ist, mit der Spindelmuttereinheit (51), um eine zweite Schwenkachse (SA51) mit dem ersten Armglied (2), und um eine dritte Schwenkachse (SA53) mit dem zweiten Koppelmittel (9) schwenkbar verbunden ist, und
**dass** das zweite Koppelmittel (9) in Art einer starren Verbindungsstrebe ausgebildet ist, deren ein Verbindungsstrebenende mit dem ersten Koppelmittel (8) um die dritte Schwenkachse (SA53) und deren anderes Verbindungsstrebenende mit dem zweiten Armglied (3) um eine Schwenkachse (SA52) schwenkbar verbunden ist.

2. Vorrichtung nach dem Oberbegriff des Anspruches 1,
**dadurch gekennzeichnet,**
**dass** das erste Koppelgetriebe (K1) über ein erstes Kardangelenk (4K) mit der motorisch angetriebenen Spindelmuttereinheit (41) des ersten Linearaktuators (4) und das zweite Koppelgetriebe (K2) über ein zweites Kardangelenk (5K) mit der motorisch angetriebenen Spindelmutter (51) des zweiten Linearaktuators (5) schwenkbar in Wirkverbindung steht,
**dass** das erste und zweite Kardangelenk (4K, 5K) jeweils eine parallel zur zweiten Achse (A2) orientierte Schwenkachse sowie eine orthogonal zur zweiten Achse (A2) orientierte Schwenkachse besitzt,
**dass** das zweite Koppelgetriebe ein erstes (8') und wenigstens ein zweites Zug- und Druckkräfte übertragendes Koppelmittel (9') aufweist, von denen das erste Koppelmittel (8') ein ternäres Getriebeglied in Form einer starren Dreiecksstruktur ist, an deren Ecken das erste Koppelmittel (8') jeweils um eine Schwenkachse derart gelagert ist, so dass das Koppelmittel (8') um eine erste Schwenkachse (SA50), die eine Schwenkachse des zweiten Kardangelenkes (5K) ist, mit der Spindelmuttereinheit (51), um eine zweite Schwenkachse (SA52) mit dem zweiten Armglied (3), und um eine dritte Schwenkachse (SA53') mit dem zweiten Koppelmittel (9') einseitig schwenkbar verbunden ist, das andererseits schwenkbar um eine Schwenkachse (SA51) mit dem ersten Armglied (2) verbunden ist.

3. Vorrichtung nach Anspruch 1 oder 2,
**dadurch gekennzeichnet, dass** das erste Koppelgetriebe (K1) ein erstes und zweites Zug- und Druckkräfte übertragendes Koppelmittel (6, 7) aufweist, von denen das erste Koppelmittel (6) einerseits mittel- oder unmittelbar an der Basis (1) um eine zur zweiten Achse (A2) parallel orientierte Schwenk-Achse (SA41) schwenkbar gelagert und andererseits mit der Spindelmuttereinheit (41) des ersten Linearaktuators (4) verbunden ist und von denen das zweite Koppelmittel (7) einerseits mit der Spindelmuttereinheit (41) des ersten Linearaktuators (4) verbunden und andererseits an dem ersten Armglied (2) um eine zur zweiten Achse (A2) parallel orientierte Schwenk-Achse (SA42) schwenkbar gelagert ist, und
dass das erste und zweite Koppelmittel (6, 7) mit der Spindelmuttereinheit (41) des ersten Linearaktuators (4) über das Kardangelenk (41) schwenkbar verbunden sind.

4. Vorrichtung nach einem der Ansprüche 1 bis 3,
**dadurch gekennzeichnet, dass** die Spindel (42) des ersten Linearaktuators (4) schwenkbar an der Basis (1) gelagert ist.

5. Vorrichtung nach Anspruch 3 oder 4,
**dadurch gekennzeichnet, dass** die Schwenkachse (SA4), um die die Spindel (42) des ersten Linearaktuators (4) schwenkbar gelagert ist, die Schwenkachse (SA41), um die das zweite Koppelmittel (6) des ersten Linearaktuators (4) schwenkbar gelagert ist, sowie die zweite Achse (A2) parallel zueinander und getrennt voneinander längs der Basis (1) angeordnet sind.

6. Vorrichtung nach einem der Ansprüche 1 bis 5,
**dadurch gekennzeichnet, dass** die Schwenkachse (SA5), um die die Spindel (52) des zweiten Linearaktuators (5) schwenkbar gelagert ist, mit der zweiten Achse (A2) zusammenfällt.

7. Vorrichtung nach einem der Ansprüche 1 bis 6,
**dadurch gekennzeichnet, dass** die Basis (1) eine Drehkranzanordnung mit einer Aussenverzahnung ist, mit der zwei gegenseitig verspannte Antriebsritzel (13, 14) in Eingriff stehen.

8. Vorrichtung nach Anspruch 7,
**dadurch gekennzeichnet, dass** die aussenverzahnte Drehkranzanordnung einen Kreisdurchmesser von größergleich 2 m aufweist

9. Vorrichtung nach einem der Ansprüche 1 bis 8,
**dadurch gekennzeichnet, dass** die Zentralhand (4Z) ein eigenständiges Modul darstellt, zu deren Antrieb ausschließlich eine elektrische Signal- und Energieversorgung erforderlich ist,
dass die Zentralhand drei orthogonal zueinander orientierte, motorisch angetriebene Schwenkachsen (A4, A5, A6) besitzt, von denen eine Schwenkachse (A5) über zwei räumlich getrennte Getriebe (23) durch einen gemeinsamen Antriebsmotor (21) jeweils über einen Riemenantrieb antreibbar ist, und von denen die beiden anderen Schwenkachsen (A4, A6) von jeweils einem axial in den Schwenkachsen angeordneten Antriebsmotor (25, 26) antreibbar sind.

10. Vorrichtung nach einem der Ansprüche 1 bis 9,
**dadurch gekennzeichnet, dass** das erste und zweite Armglied wenigstens abschnittsweise in Form von Doppelstreben ausgebildet sind, so dass längs eines Armgliedes zwei getrennte Kraftpfade zwischen den jeweiligen Anlenkungspunkten der Armglieder vorhanden sind.

11. Vorrichtung nach Anspruch 10,
**dadurch gekennzeichnet, dass** das zweite Armglied (3) eine Doppelarmschwinge (31) aufweist, an der über ein Montagemittel (17) jeweils ein Armrohr (32) aus einer Anzahl unterschiedlich lang dimensionierter Armrohre (32) modulartig lösbar fest montierbar ist.

12. Vorrichtung nach Anspruch 10,
**dadurch gekennzeichnet, dass** die Schwenkachse (SA52), um die das zweite Armglied (3) schwenkbar mit dem zweiten Koppelmittel (9) oder mit dem ersten Koppelmittel (8') verbunden ist, sowie die dritte Achse (A3) längs der Doppelarmschwinge (31) beabstandet zueinander angeordnet sind.

13. Vorrichtung nach einem der Ansprüche 1 bis 12,
**dadurch gekennzeichnet, dass** die Koppelmittel des ersten und zweiten Koppelgetriebes (K1, K2) doppelgabelförmig ausgebildet sind, so dass längs eines jeweiligen Koppelmittels zwei getrennte Kraftpfade zwischen den jeweiligen Anlenkungspunkten der Koppelmittel vorhanden sind.

14. Vorrichtung nach einem der Ansprüche 7 bis 13,
**dadurch gekennzeichnet, dass** die zwei gegenseitig verspannten Antriebritzel (13, 14) Teile eines Verspannungsgetriebes (15) sind, das mittels einer Positionierungseinheit relativ zur Drehkranzanordnung translatorisch und rotatorisch gelagert ist.

15. Vorrichtung nach einem der Ansprüche 1 bis 14,
**dadurch gekennzeichnet, dass** das erste Armglied (2) schwenkbar um eine Schwenkachse (SA12) mit einer sich einseitig schwenkbar um eine Schwenkachse (SA10) an der Basis (1) abstützenden Hydraulikzylindereinheit (10) verbunden ist, wobei die Schwenkachsen (SA10) und (SA12) parallel zur zweiten Achse (A2) orientiert sind.

## Claims

1. An articulated arm robot-type device for handling a payload, comprising a robot arm (R)
- which is mounted on a base (1) that is rotatable about a first axis (A1),
- at least two arm elements (2, 3) that are arranged behind one another in the form of a kinematic chain, wherein a first arm element (2) is mounted on the base (1) pivotally about a second axis (A2) that is oriented orthogonal to the first axis and a second arm element (3) is attached to the first arm element (2) pivotally about a third axis (A3) that is oriented parallel to the second axis (A2), as well as
- a central hand (4Z) attached to the end of the kinematic chain,
wherein a first linear actuator (4) is provided for pivoting the first arm element (2) about the second axis (A2) and on the one hand functionally connected to the base (1) by means of a first coupling gear (K1) and on the other hand functionally connected to the first arm element (2), and
wherein a second linear actuator (5) is provided for pivoting the second arm element (3) about the third axis (A3) and functionally connected to the base (1), the first arm element (2) and the second arm element (3) by means of a second coupling gear (K2), with the first and the second linear actuator (4, 5) respectively being realized in the form of spindle drives, which respectively feature a motor-driven spindle nut unit (41, 51) that is engaged with a spindle (42, 52) in the form of a threaded rod, and with the respective spindle being mounted pivotally about a pivoting axis (SA4, SA5) that is oriented parallel to the second axis (A2),
**characterized in**
**that** the first coupling gear (K1) is pivotally and functionally connected to the motor-driven spindle nut unit (41) of the first linear actuator (4) by means of a first universal joint (4K) and the second coupling gear (K2) is pivotally and functionally connected to the motor-driven spindle nut (51) of the second linear actuator (5) by means of a second universal joint (5K), in
**that** the first and the second universal joint (4K, 5K) respectively have a pivoting axis that is oriented parallel to the second axis (A2), as well as a pivoting axis that is oriented orthogonal to the second axis (A2), in
**that** the second coupling gear (K2) features a first coupling means (8) and a second coupling means (9) that respectively transmit tensile and compressive forces, in
**that** the first coupling means (8) consists of a ternary gear element in the form of a rigid triangular structure, on the corners of which the first coupling means (8) is respectively mounted pivotally about a pivoting axis such that the coupling means (8) is connected to the spindle nut unit (51) pivotally about a first pivoting axis corresponding to a pivoting axis of the second universal joint (5K), connected to the first arm element (2) pivotally about a second pivoting axis (SA51) and connected to the second coupling means (9) pivotally about a third pivoting axis (SA53), and in
**that** the second coupling means (9) is realized in the form of a rigid connecting brace, one connecting brace end of which is connected to the first coupling means (8) pivotally about the third pivoting axis (SA53) and the other connecting brace end of which is connected to the second arm element (3) pivotally about a pivoting axis (SA52).

2. A device according to the preamble of claim 1,
**characterized in**
**that** the first coupling gear (K1) is pivotally and functionally connected to the motor-driven spindle nut unit (41) of the first linear actuator (4) by means of a first universal joint (4K) and the second coupling gear (K2) is pivotally and functionally connected to the motor-driven spindle nut (51) of the second linear actuator (5) by means of a second universal joint (5K), in
**that** the first and the second universal joint (4K, 5K) respectively have a pivoting axis that is oriented parallel to the second axis (A2), as well as a pivoting axis that is oriented orthogonal to the second axis (A2), and in
**that** the second coupling gear features a first (8') and at least one second coupling means (9') that respectively transmit tensile and compressive forces, wherein the first coupling means (8') is a ternary gear element in the form of a rigid triangular structure, on the corners of which the first coupling means (8') is respectively mounted pivotally about a pivoting axis such that the coupling means (8') is on the one hand connected to the spindle nut unit (51) pivotally about a first pivoting axis (SA50) corresponding to a pivoting axis of the second universal joint (5K), connected to the second arm element (3) pivotally about a second pivoting axis (SA52) and connected to the second coupling means (9') pivotally about a third pivoting axis (SA53') and on the other hand connected to the first arm element (2) pivotally about a pivoting axis (SA51).

3. The device according to claim 1 or 2,
**characterized in**
**that** the first coupling gear (K1) features a first and a second coupling means (6, 7) that respectively transmit tensile and compressive forces, wherein the first coupling means (6) is on the one hand directly or indirectly mounted on the base (1) pivotally about a pivoting axis (SA41) that is oriented parallel to the second axis (A2) and on the other hand connected to the spindle nut unit (41) of the first linear actuator (4), and wherein the second coupling means (7) is on the one hand connected to the spindle nut unit (41) of the first linear actuator (4) and on the other hand mounted on the first arm element (2) pivotally about a pivoting axis (SA42) that is oriented parallel to the second axis (A2), and in
**that** the first and the second coupling means (6, 7) are pivotally connected to the spindle nut unit (41) of the first linear actuator (4) by means of the universal joint (41).

4. The device according to one of claims 1-3, **characterized in that** the spindle (42) of the first linear actuator (4) is pivotally mounted on the base (1).

5. The device according to claim 3 or 4, **characterized in that** the pivoting axis (SA4), about which the spindle (42) of the first linear actuator (4) is pivotally mounted, the pivoting axis (SA41), about which the second coupling means (6) of the first linear actuator (4) is pivotally mounted, and the second axis (A2) are arranged along the base (1) parallel to one another and separately of one another.

6. The device according to one of claims 1-5, **characterized in that** the pivoting axis (SA5), about which the spindle (52) of the second linear actuator (5) is pivotally mounted, coincides with the second axis (A2).

7. The device according to one of claims 1-6, **characterized in that** the base (1) consists of a live ring arrangement with an external gearing that is engaged with two mutually tensioned driving pinions (13, 14).

8. The device according to claim 7, **characterized in that** the externally geared live ring arrangement has a diameter greater than or equal to 2 m.

9. The device according to one of claims 1-8,
**characterized in**
**that** the central hand (4Z) represents an independent module, the drive of which merely requires an electric signal and energy supply, and in
**that** the central hand has three motor-driven pivoting axes (A4, A5, A6) that are oriented orthogonal to one another and one pivoting axis (A5) of which can be driven via two spatially separated gears (23) by a common driving motor (21) with the aid of a respective belt drive, wherein the two other pivoting axes (A4, A6) can be respectively driven by a driving motor (25, 26) arranged axially in the pivoting axes.

10. The device according to one of claims 1-9, **characterized in that** the first and the second arm element are at least sectionally realized in the form of double braces such that two separate force transmission paths exist along an arm element between the respective coupling points of the arm elements.

11. The device according to claim 10, **characterized in that** the second arm element (3) features a double arm rocker (31), on which one arm tube (32) of a plurality of arm tubes (32) with different lengths can be modularly and rigidly mounted in a detachable fashion with the aid of mounting means (17).

12. The device according to claim 10, **characterized in that** the pivoting axis (SA52), about which the second arm element (3) is pivotally connected to the second coupling means (9) or to the first coupling means (8'), and the third axis (A3) are arranged at a distance from one another along the double arm rocker (31).

13. The device according to one of claims 1-12, **characterized in that** the coupling means of the first and the second coupling gear (K1, K2) are realized in the form of double forks such that two separate force transmission paths exist along a respective coupling means between the respective coupling points of the coupling means.

14. The device according to one of claims 7-13, **characterized in that** the two mutually tensioned driving pinions (13, 14) form part of a tensioned gear (15) that is mounted in a translatory and rotatory fashion relative to the live ring arrangement by means of a positioning unit.

15. The device according to one of claims 1-14, **characterized in that** the first arm element (2) is connected to a hydraulic cylinder unit (10), one side of which is supported on the base (1) pivotally about a pivoting axis (SA10), such that it is pivotable about a pivoting axis (SA12), wherein the pivoting axes (SA10) and (SA12) are oriented parallel to the second axis (A2).

## Revendications

1. Dispositif de type robot anthropomorphe pour la manipulation d'une charge utile avec un bras de robot (R), qui
- est fixé sur une base (1) rotative autour d'un premier axe (A1),
- au moins deux organes de bras (2,3) disposés l'un derrière l'autre à la manière d'une chaine cinématique, desquels un premier organe de bras (2) est positionné de manière pivotante sur la base (1) autour d'un deuxième axe (A2), orienté orthogonalement au premier axe et un deuxième organe de bras (3) est monté de manière pivotante sur le premier organe de bras (2) autour d'un troisième axe (A3), orienté parallèlement au deuxième axe (A2), ainsi que
- possède une main centrale (4Z) montée à l'extrémité sur la chaine cinématique,
dans lequel un premier actionneur linéaire (4) faisant pivoter le premier organe de bras (2) autour du deuxième axe (A2) est prévu, qui est en liaison opérationnelle par l'intermédiaire d'une première transmission de couplage (K1) d'un côté avec la base (1) et d'un autre côté avec le premier organe de bras (2), et
un deuxième actionneur linéaire (5) faisant pivoter le deuxième organe de bras (3) autour du troisième axe (A3) est prévu, qui est en liaison opérationnelle par l'intermédiaire d'une deuxième transmission de couplage (K2) avec la base (1), le premier organe de bras (2) et le deuxième organe de bras (3), et le premier et le deuxième actionneur linéaire (4,5) sont respectivement conçus comme un entraînement de bras, qui procure respectivement une unité d'écrou de broche (41,51) entraînée de manière motorisée, qui vient en prise avec une broche (42,52) sous la forme d'une tige filetée, qui est positionnée de manière pivotante autour d'un axe de pivotement (SA4,SA5) orienté parallèlement à un deuxième axe (A2),
**caractérisé en ce que**
la première transmission de couplage (K1) est en liaison opérationnelle pivotante par l'intermédiaire d'un premier joint de cardan (4K) avec l'unité d'écrou de broche entraînée de manière motorisée (41) du premier actionneur linéaire (4) et la deuxième transmission de couplage (K2) par l'intermédiaire d'un deuxième joint de cardan (5K) avec l'écrou de broche entraîné de manière motorisé (51) du deuxième actionneur linéaire (5),
**en ce que** le premier et le deuxième joint de cardan (4K, 5K) possèdent respectivement un axe de pivotement orienté parallèlement au deuxième axe (A2) ainsi qu'un axe de pivotement orienté orthogonalement au deuxième axe (A2),
**en ce que** la deuxième transmission de couplage (K2) présente respectivement un premier moyen de couplage (8) et un deuxième moyen de couplage (9) transmettant des forces de traction et de pression,
**en ce que** le premier moyen de couplage (8) est un organe de transmission ternaire sous forme d'une structure triangulaire rigide, aux coins de laquelle le premier moyen de couplage (8) est positionné respectivement autour d'un axe de pivotement de telle sorte que le moyen de couplage (8) soit relié de manière pivotante autour d'un premier axe de pivotement, qui est un axe de pivotement du deuxième joint de cardan (5K), avec l'unité d'écrou de broche (51), autour d'un deuxième axe de pivotement (SA51) avec le premier organe de bras (2) et autour d'un troisième axe de pivotement (SA53) avec le deuxième moyen de couplage (9),
**en ce que** le deuxième moyen de couplage (9) est conçu à la manière d'une colonne de liaison rigide, dont une extrémité de colonne de liaison est reliée de manière pivotante avec le troisième axe de pivotement (SA53) et dont une autre extrémité de colonne de liaison est reliée de manière pivotante avec le deuxième organe de liaison (3) autour d'un axe de pivotement (SA52).

2. Dispositif selon la revendication 1, **caractérisé en ce que**
la première transmission de couplage (K1) est en liaison opérationnelle pivotante par l'intermédiaire d'un premier joint de cardan (4K) avec l'unité d'écrou de broche entraînée de manière motorisée (41) du premier actionneur linéaire (4) et la deuxième transmission de couplage (K2) est en liaison opérationnelle pivotante par l'intermédiaire d'un deuxième joint de cardan (5K) avec l'unité d'écrou de broche entraînée de manière motorisée (51) du deuxième actionneur linéaire (5),
**en ce que** le premier et le deuxième joint de cardan (4K, 5K) possèdent respectivement un axe de pivotement orienté parallèlement au deuxième axe (A2) ainsi qu'un axe de pivotement orienté orthogonalement au deuxième axe (A2),
**en ce que** la deuxième transmission de couplage présente un premier (8') et au moins un deuxième moyen de couplage (9') transmettant des forces de traction et pression, desquels le premier moyen de couplage (8') est un organe de transmission ternaire sous forme d'une structure triangulaire rigide, aux coins de laquelle le premier moyen de couplage (8) est positionné respectivement autour d'un axe de pivotement de telle sorte que le moyen de couplage (8') soit relié de manière pivotante aux extrémités autour d'un premier axe de pivotement (SA50), qui est un axe de pivotement du deuxième joint de cardan (5K), avec l'unité d'écrou de broche (51), autour d'un deuxième axe de pivotement (SA52) avec le deuxième organe de bras (3) et autour d'un troisième axe de pivotement (SA53') avec le deuxième moyen de couplage (9'), qui est relié de manière pivotante d'un autre côté autour d'un axe de pivotement (SA51) avec le premier organe de bras (2).

3. Dispositif selon la revendication 1 ou 2, **caractérisé en ce que** la première transmission de couplage (K1) présente un premier et un deuxième moyen de couplage (6,7) transmettant des forces de traction et pression, desquels le premier moyen de couplage (6) est positionné de manière pivotante d'un côté directement ou indirectement sur la base (1) autour d'un axe de pivotement (SA41) orienté parallèlement au deuxième axe (A2) et est relié d'un autre côté avec l'unité d'écrou de broche (41) du premier actionneur linéaire (4) et desquels le deuxième moyen de couplage (7) est relié d'un côté avec l'unité d'écrou de broche (41) du premier actionneur linéaire (4) et d'un autre côté est positionné de manière pivotante sur le premier organe de bras (2) autour d'un axe de pivotement (SA42) orienté parallèlement au deuxième axe (A2) et
**en ce que** le premier et le deuxième moyen de couplage (6,7) sont reliés de manière pivotante avec l'unité d'écrou de broche (41) du premier actionneur linéaire (4) par l'intermédiaire du joint de cardan (41).

4. Dispositif selon une des revendications 1 à 3, **caractérisé en ce que** la broche (42) du premier actionneur inéaire (4) est positionnée de manière pivotante sur la base (1).

5. Dispositif selon la revendication 3 ou 4, **caractérisé en ce que** l'axe de pivotement (SA4) autour duquel la broche (42) du premier actionneur linéaire (4) est positionnée de manière pivotante, l'axe de pivotement (SA41) autour duquel le deuxième moyen de couplage (6) du premier actionneur linéaire (4) est positionné de manière pivotante ainsi que les deuxièmes axes (A2) sont disposés parallèlement l'un à l'autre et séparément l'un de l'autre le long de la base (1).

6. Dispositif selon une des revendications 1 à 5, **caractérisé en ce que** l'axe de pivotement (SA5), autour duquel la broche (52) du deuxième actionneur linéaire (5) est positionnée de manière pivotante, coïncide avec le deuxième axe (A2).

7. Dispositif selon une des revendications 1 à 6, **caractérisé en ce que** la base (1) est un dispositif de couronne rotative avec une denture extérieure, avec laquelle deux pignons d'entraînement (13,14) contraints réciproquement viennent en prise.

8. Dispositif selon la revendication 7, **caractérisé en ce que** le dispositif de couronne rotative à denture externe présente un diamètre de taille égale ou supérieure à 2 m.

9. Dispositif selon une des revendications 1 à 8, **caractérisé en ce que** la main centrale (4Z) constitue un module autonome, pour l'entraînement duquel une alimentation d'énergie et de signal électrique est nécessaire,
**en ce que** la main centrale possède trois axes de pivotement (A4,A5,A6) orientés orthogonalement l'un à l'autre, entraînés de manière motorisée, desquels un axe d'entraînement (A5) peut être entrainé par l'intermédiaire de deux transmissions séparées spatialement (23) par un moteur d'entraînement commun (21) respectivement via un entraînement à courroie, et desquels les deux autres axes de pivotement (A4 , A6) peuvent être entraînés par respectivement un moteur d'entraînement (25,26) disposé axialement dans les axes de pivotement.

10. Dispositif selon une des revendications 1 à 9, **caractérisé en ce que** le premier et le deuxième organe de bras sont conçus au moins par portions sous la forme de doubles traverses, de sorte que le long d'un organe de bras deux trajets de force séparés entre les points d'articulation respectifs des organes de bras soient présents.

11. Dispositif selon la revendication 10, **caractérisé en ce que** le deuxième organe de bras (3) présente un balancier à bras double (31), sur lequel par l'intermédiaire d'un moyen de montage (17) respectivement un tube de bras (32) composé d'une pluralité de tubes de bras (32) aux dimensions de longueur différentes peut être monté de manière modulaire amovible.

12. Dispositif selon la revendication 10, **caractérisé en ce que** l'axe de pivotement (SA52), autour duquel le deuxième organe de bras (3) est relié de manière pivotante avec le deuxième moyen de couplage (9) ou avec le premier moyen de couplage (8'), ainsi que la troisième axe (A3) sont disposés le long du balancier à bras double (31) en étant espacés l'un de l'autre.

13. Dispositif selon une des revendications 1 à 12, **caractérisé en ce que** le moyen de couplage de la première et la deuxième transmission de couplage (K1, K2) sont configurés en forme de double fourche, de sorte que le long d'un moyen de couplage respectif deux trajets de force séparés entre les points d'articulation respectifs des moyens de couplage soient présents.

14. Dispositif selon une des revendications 7 à 13, **caractérisé en ce que** les deux pignons d'entraînement (13,14) contraints réciproquement sont des parties d'une transmission de tension (15), qui est positionnée au moyen d'une unité de positionnement relativement au dispositif de couronne rotative par translation et rotation.

15. Dispositif selon une des revendications 1 à 14, **caractérisé en ce que** le premier organe de bras (2) est relié rotativement autour d'un axe de pivotement (SA12) avec une unité de vérin hydraulique (10) s'appuyant d'un côté sur la base (1) de manière pivotante autour d'un axe de pivotement (SA10), dans lequel les axes de pivotement (SA10) et (SA12) sont orientés parallèlement au deuxième axe (A2).
